# EUROPEAN PATENT APPLICATION

(11) **EP 2 813 954 A1**
(43) Date of publication of application: **17.12.2014**
(21) Application number: 13725264.9
(22) Date of filing: 25.01.2013
(51) Int. Cl.: G06F 17/30, G10L 15/00

(54) **INFORMATION SEARCH APPARATUS AND INFORMATION SEARCH METHOD**

(30) Priority: 08.02.2012 JP 2012025396
(71) Applicant: NTT Docomo, Inc., Tokyo 100-6150 (JP)
(72) Inventor: IIZUKA Shinya, Tokyo 100-6150 (JP)
(74) Representative: Viering, Jentschura & Partner Patent- und Rechtsanwälte
(86) International application number: PCT/JP2013/051632
(87) International publication number: WO 2013/118592

(57) **Abstract**

An information retrieval device (1) for retrieving information related to a word includes: an input unit (11) for inputting a word; a pattern generation unit (13) which, upon input of a new word after input of a given number of words, generates a word group in a case of adding the new word to a previously input word and a word group in a case of replacing a previously input word with the new word; an occurrence information derivation unit (14x) which, for each of the word groups generated, derives occurrence information corresponding to a probability of occurrence of the word group; and a determination unit (15) which determines a word group to be used in new retrieval, based on the derived occurrence information.

## Description

### Technical Field

A present invention relates to an information retrieval device and an information retrieval method with a function to retrieve information using a word or words.

### Background Art

Words used in information retrieval may be entered, for example, through a keyboard or through a microphone. For example,

Patent Literature 1 below discloses a technology of performing a speech recognition process with an input speech and retrieving information using words obtained as the result of the recognition.

### Citation List

### Patent Literature

Patent Literature 1: Japanese Patent Application Laid-open No. Heisei 10-21254

### Summary of the Invention

### Technical Problem

When the retrieval of information is actually carried out, cases assumed upon input of a new word (e.g., input of a speech) after input of a word, include (a) a case of performing the retrieval by adding the new word to the previously input word and (b) a case of performing the retrieval by replacing the previously input word with the new word.

At this time, whether adding the new word to the previously input word or replacing the previously input word with the new word is not uniquely determined. A man can determine whether addition or replacement is appropriate, by comparing between the meaning in the case of adding the new word and the meaning in the case of replacing the previously input word with the new word. However, in order to readily and suitably make the aforementioned determination without human intervention, it is indispensable to preset a rule with consideration of meanings, which requires an immense amount of effort.

### Solution to Problem

The present invention has been accomplished to solve the above problem and it is an object of the present invention to provide an information retrieval device and an information retrieval method enabling easy and suitable setting of an appropriate word or words as a query upon input of a new word, without a need for indispensability of presetting a rule with consideration of meanings.

An information retrieval device according to the present invention is an information retrieval device for retrieving information related to a word, the information retrieval device comprising: an input unit for inputting a word; a pattern generation unit which, upon input of a new word after input of a given number of words, generates a word group in a case of adding the new word to a previously input word and a word group in a case of replacing a previously input word with the new word; an occurrence information derivation unit which, for each of the word group generated, derives occurrence information corresponding to a probability of occurrence of the word group; and a determination unit which determines a word group to be used in new retrieval, based on the derived occurrence information. The determined "word group to be used in new retrieval" becomes a query of the new retrieval.

In the information retrieval device of this configuration, when the new word is entered after the input of the given number of words, the pattern generation unit generates the word group in the case of adding the new word to the previously input word and the word group in the case of replacing the previously input word with the new word; the occurrence information derivation unit derives the occurrence information of each of the generated word groups; then the determination unit determines the word group to be used in the new retrieval, based on the derived occurrence information. This allows the information retrieval device to readily and suitably determine the word group to be used in the new retrieval, according to the respective occurrence information of various word groups. Namely, the information retrieval device can readily and suitably set an appropriate word or words as a query, upon input of the new word, without a need for indispensability of presetting a rule with consideration of meanings.

The information retrieval device as described above may be configured to further comprise: a class information database storing class information of various words; and the pattern generation unit reads the class information of each of the previously input word and the new word out of the class information database, and generates the word groups, excluding the case of replacing "the previously input word having the class information different form the class information that the new word has" with "the new word". This configuration allows the information retrieval device to avoid the word group resulting from replacement between words having the class information different from each other, thereby eliminating an irrelevant word group.

The determination unit may be configured to output the word groups in a selectable ranking format in descending order of the derived occurrence information, and configured to determine a word group selected by a user, as the word group to be used in the new retrieval. In this case, it becomes feasible to select the word group optimum for the user. The determination unit may determine a word group with maximum occurrence information, as the word group to be used in the new retrieval. In this case, there is no need for intervention of the user and the word group can be automatically determined.

A variety of modes can be adopted for the input unit for inputting a word. For example, the input unit may be configured to include: a speech input unit for inputting a speech; and a recognition unit for recognizing a word from the input speech. Besides the mode of the speech input of word as described above, it is also possible to adopt modes of input of a word by various information input means such as a keyboard. The occurrence information derivation unit may be configured to include an occurrence information database storing occurrence information of various word groups, and to read the occurrence information of each of the generated word groups out of the occurrence information database, to derive the respective occurrence information of the word groups.

The foregoing "occurrence information of the word group" includes, for example, (1) occurrence probabilities of individual words constituting the word group, (2) a co-occurrence probability of a plurality of words forming the word group, (3) information derived according to a predetermined procedure from the foregoing occurrence probabilities and co-occurrence probability (e.g., values obtained by dividing the co-occurrence probability by the occurrence probabilities of individual words in order), (4) information determined according to a rule made by humans, and so on. The aforementioned "given number of words" may be one word or a plurality of words. Therefore, when the "given number of words" is one word, the word group in the case of replacing the previously input word (one word) with the new word is "only the new word", and this case is also included in the word group in the present invention. On the other hand, the "given number of words" may be a plurality of words, and in this case, the occurrence information derivation unit derives co-occurrence information as the occurrence information. This "co-occurrence information" includes, for example, the aforementioned (2) co-occurrence probability of a plurality of words forming the word group, (3) information derived according to a predetermined procedure from the occurrence probabilities and co-occurrence probability (e.g., values obtained by dividing the co-occurrence probability by the occurrence probabilities of individual words in order), (4) information determined according to a rule made by humans, and so on.

In the present invention, "adding the new word to a previously input word" may include: a case of adding the new word as an additional word; a case of binding the new word to the head of one previously input word; and a case of binding the new word to the tail of one previously input word. On the other hand, "adding the new word to a previously input word" may include only the case of adding the new word as an additional word, out of the above cases.

The present invention associated with the information retrieval device as described above can also be regarded as the invention associated with an information retrieval method and can be described as below. Namely, an information retrieval method according to the present invention is an information retrieval method for retrieving information related to a word, which is executed by an information retrieval device, the information retrieval method comprising: an input step for inputting a word; a pattern generation step of, upon input of a new word after input of a given number of words, generating a word group in a case of adding the new word to a previously input word and a word group in a case of replacing a previously input word with the new word; an occurrence information derivation step of, for each of the word groups generated, deriving occurrence information corresponding to a probability of occurrence of the word group; and a determination step of determining a word group to be used in new retrieval, based on the derived occurrence information.

### Advantageous Effect of Invention

The present invention enables easy and suitable setting of an appropriate word or words as a query upon input of a new word, without a need for indispensability of presetting a rule with consideration of meanings.

### Brief Description of Drawings

Fig. 1 is a block diagram showing a functional configuration of an information retrieval device of the first embodiment.
Fig. 2 is a drawing showing a hardware configuration of the information retrieval device.
Fig. 3 is a flowchart showing an information retrieval procedure of the first embodiment.
Fig. 4 is a block diagram showing a functional configuration of an information retrieval device of the second embodiment.
Fig. 5 is a flowchart showing an information retrieval procedure of the second embodiment.
Fig. 6 is a block diagram showing a functional configuration of an information retrieval device of the third embodiment.
Fig. 7 is a flowchart showing an information retrieval procedure of the third embodiment.
Fig. 8 is a drawing showing a data example stored in a co-occurrence probability database.
Fig. 9 is a drawing showing a data example stored in a class information database.
Fig. 10 is a drawing showing output examples of outputting word groups in a ranking format.
Fig. 11 is a drawing for explaining a process of generating word groups.
Fig. 12 is a configuration diagram of an information retrieval device with essential components for achievement of action and effect according to the present invention.
Fig. 13 is a flowchart showing an information retrieval procedure executed by the information retrieval device in Fig. 12.
Fig. 14 is a drawing for explaining a process of generating word groups when a new word is entered after input of one word.

### Embodiments of the Invention

Various embodiments of the information retrieval device and information retrieval method according to the present invention will be described with reference to the drawings. The first embodiment below will describe an embodiment of performing generation of word groups upon input of a new word after input of a given number of words (a plurality of words as an example), derivation of occurrence information (a co-occurrence probability as an example) of each word group, and determination of a word group based on the occurrence information; the second embodiment will describe an embodiment of generating word groups according to class information of words; the third embodiment will describe an embodiment of outputting word groups in a ranking format in descending order of co-occurrence information and allowing a user to select one of them. The same portions will be denoted by the same reference signs as much as possible, without redundant description.

### [First Embodiment]

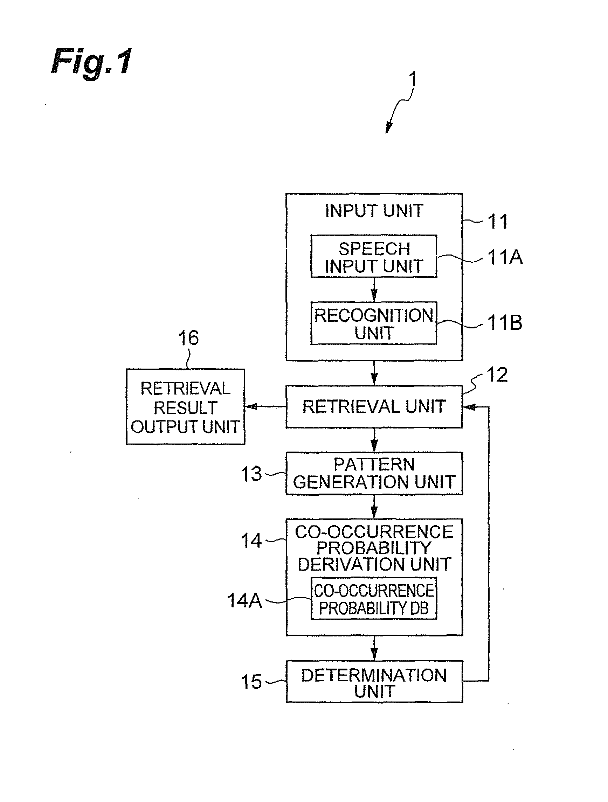

Fig. 1 is a block diagram showing a functional configuration of an information retrieval device 1. The information retrieval device 1 is an information retrieval device with an information retrieval function using words as keys (i.e., a function to input words and retrieve information related to the words).

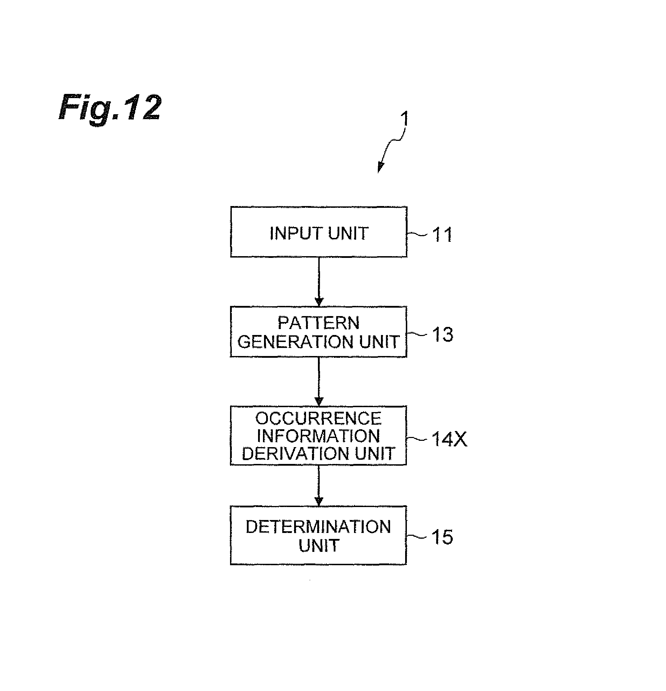

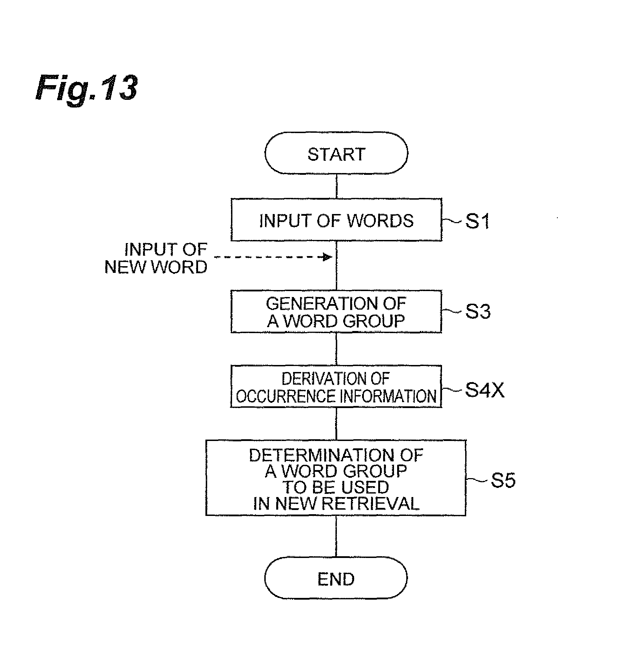

As shown in Fig. 1, the information retrieval device 1 is functionally provided with an input unit 11, a retrieval unit 12, a pattern generation unit 13, a co-occurrence probability derivation unit 14 (occurrence information derivation unit), a determination unit 15, and a retrieval result output unit 16. The first to third embodiments will describe examples of first inputting words, performing information retrieval using the words, and thereafter determining an appropriate word group upon input of a new word, but it should be noted that it is not indispensable to perform the information retrieval using the words immediately after the first input of the words. Namely, the present invention can also be applied to a procedure in which, after the first input of the words, the new word is entered before execution of the information retrieval using the words. This will be described later using Figs. 12 and 13.

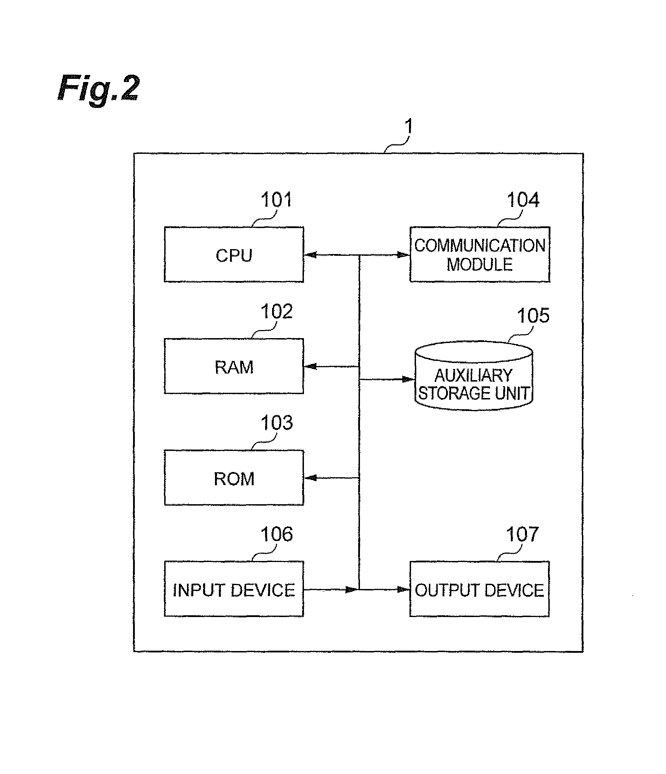

Fig. 2 is a hardware configuration diagram of the information retrieval device 1. The information retrieval device 1 is physically constructed, as shown in Fig. 2, as a computer system including a CPU 101, a RAM 102 and a ROM 103 as main storage devices, a communication module 104 as a data transmission/reception device, an auxiliary storage device 105 such as a hard disk or a flash memory, an input unit 106 such as a keyboard as an input device, an output device 107 such as a display, and so on. Each of the functions shown in Fig. 1 is implemented by retrieving given computer software onto the hardware of the CPU 101, RAM 102, and others shown in Fig. 2, making the communication module 104, the input device 106, and the output device 107 operate under control of the CPU 101, and performing readout and writing of data from and in the RAM 102 and the auxiliary storage device 105. Each of the functional units of the information retrieval device 1 will be again described below referring to Fig. 1.

The input unit 11 is a functional element that is provided for inputting words and is constructed including a speech input unit 11 A, for example, such as a microphone, and a recognition unit 11B for recognition of a word or words from an input speech. The recognition unit 11B may be composed of a well-known speech recognition device, and, for example, is configured to divide the input speech into a plurality of sections and execute a speech recognition process for each of the sections with reference to an internal dictionary database (not shown). Besides the configuration wherein the recognition unit 11B is composed of the recognition unit built in the information retrieval device 1 as shown in Fig. 1, the recognition unit 11B may also be composed of an external speech recognition server. In this case, a configuration wherein the external speech recognition server is added to the information retrieval device 1, corresponds to the information retrieval device according to the present invention.

The retrieval unit 12 is a functional element that retrieves information related to input words, and can be composed of a well-known retrieval unit. For example, when a speech of "ramen in Shibuya" is entered into the speech input unit 11A by a user, the recognition unit 11B recognizes two words, "Shibuya" and "ramen", and the retrieval unit 12 retrieves information related to these words. Thereafter, if the user enters a speech of "What if it is hamburger" into the speech input unit 11A, the recognition unit 11B recognizes the word of "hamburger" and the below-described pattern generation unit 13, co-occurrence probability derivation unit 14, and determination unit 15 determine a word group to be used in new retrieval, from a word group in a case of adding the new word "hamburger" to the already-handled two words "Shibuya" and "ramen" and word groups in a case of replacing the first input word "Shibuya" or "ramen" with the new word "hamburger". A retrieval condition in the retrieval unit 12 can be optionally set and the retrieval herein is assumed to be a retrieval process in the so-called AND condition; however, the retrieval does not have to be limited to it, and may be a retrieval process in the so-called OR condition. This also applies similarly to the below embodiments.

The pattern generation unit 13 is a functional element that, when a new word is input after execution of retrieval of information, generates a word group in the case of adding the new word to the previously input words and a word group in the case of replacing the previously input word with the new word, and the details of the process will be described later.

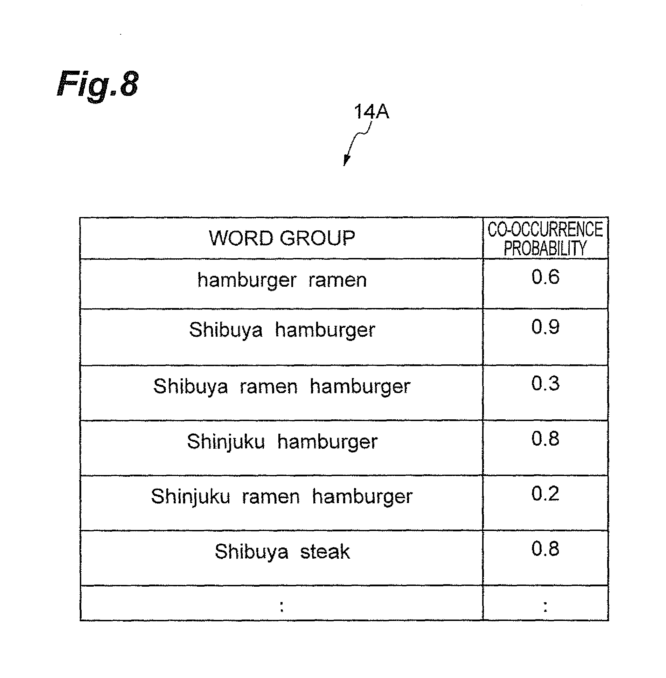

The co-occurrence probability derivation unit 14 is a functional element that derives co-occurrence probabilities of the respective word groups generated, and, specifically, it includes a co-occurrence probability database 14A (occurrence information database) storing co-occurrence probabilities of various word groups and is configured to derive the co-occurrence probabilities of the respective word groups by reading the co-occurrence probabilities of the respective word groups generated, out of the co-occurrence probability database 14A. The co-occurrence probability database 14A stores co-occurrence probabilities of various word groups in correspondence to the word groups, for example, as shown in Fig. 8. In the case where, after input of "a plurality of words", word groups are generated upon input of a new word, each of the word groups generated includes a plurality of words; therefore, an example described hereinbelow is one using co-occurrence information about the plurality of words as "occurrence information corresponding to a probability of occurrence of a word group" and using a co-occurrence probability as an example of the co-occurrence information. However, the co-occurrence information applicable herein other than the co-occurrence probability, includes information derived according to a predetermined procedure from occurrence probabilities and a co-occurrence probability of individual words (e.g., values obtained by dividing the co-occurrence probability by the occurrence probabilities of individual words in order) and information determined according to a rule made by humans.

The determination unit 15 is a functional element that determines a word group to be used in new retrieval, based on the co-occurrence probabilities derived, and the determination unit 15 in the present embodiment determines a word group with a maximum co-occurrence probability as the word group to be used in the new retrieval.

The retrieval result output unit 16 is a functional element that outputs the result of the retrieval process by the retrieval unit 12. The form of the output may be, for example, display output or speech output but is not limited to a specific output form.

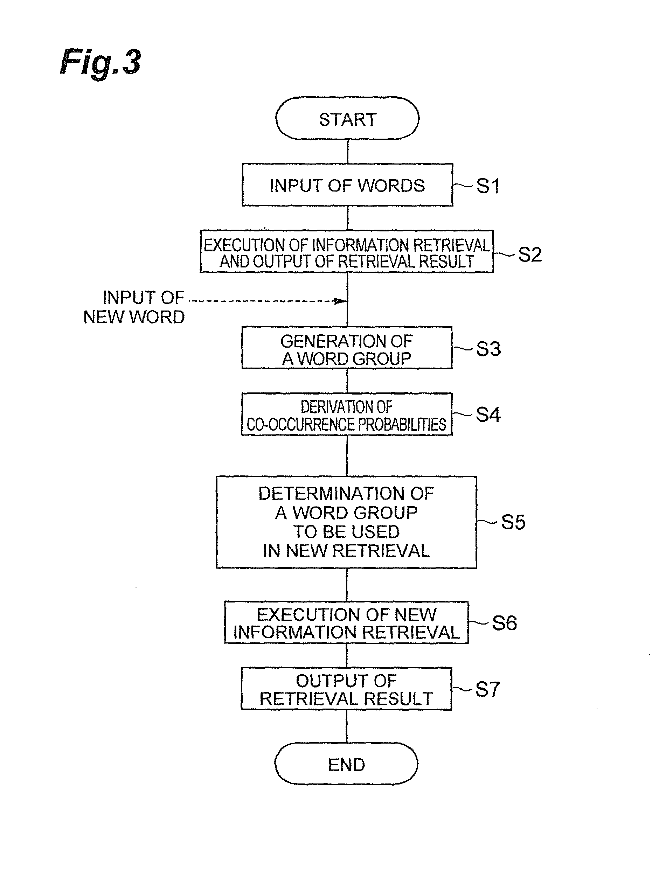

The processing executed by the information retrieval device 1 of the first embodiment (the processing according to an information retrieval method of the present invention) will be described along the flowchart of Fig. 3.

A plurality of words are entered through the input unit 11 (step S1 in Fig. 3: input step); the retrieval unit 12 executes the information retrieval using the input words and the retrieval result output unit 16 outputs the retrieval result (step S2: retrieval step). Upon input of a new word thereafter, the pattern generation unit 13 generates a word group in the case of adding the new word to the previously input words and a word group in the case of replacing each of the previously input words with the new word (step S3: pattern generation step).

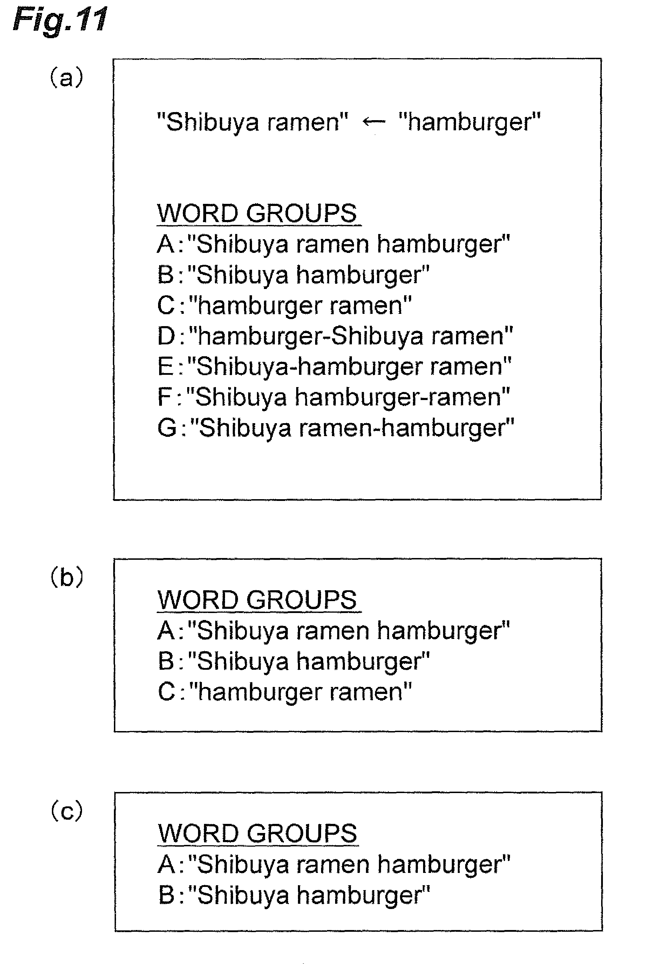

The generation process of word groups herein will be described with reference to Fig. 11. Let us assume herein a case where, after input of words "Shibuya ramen", a new word "hamburger" is entered, as shown in Fig. 11(a). In this case, the pattern generation unit 13 generates word group B "Shibuya hamburger" and word group C "hamburger ramen" as the word groups in the case of replacing each of the previously input words with the new word.

On the other hand, the addition of the new word, in the present invention, generally includes (1) a case of adding the new word as an additional word, (2) a case of binding the new word to the head of one previously input word, and (3) a case of binding the new word to the tail of one previously input word. For this reason, the word groups in the case of addition of the new word are considered to be word group A "Shibuya ramen hamburger", word group D "hamburger-Shibuya ramen", word group E "Shibuya-hamburger ramen", word group F "Shibuya hamberger-ramen", and word group G "Shibuya ramen-hamburger". In fact, however, the foregoing (2) case of binding the new word to the head of one previously input word and (3) case of binding the new word to the tail of one previously input word are highly likely to include even a generally non-existent word (e.g., hamburger-Shibuya or the like) as a processing object and, therefore, the addition of the new word may include only the foregoing (1) case of adding the new word as an additional word, excluding (2) the case of binding the new word to the head of one previously input word and (3) the case of binding the new word to the tail of one previously input word. For this reason, the embodiments below will be described on the assumption of only (1) the case of adding the new word as an additional word, as to the addition of the new word.

According to the above procedure, the pattern generation unit 13 of the present embodiment generates the word group A "Shibuya ramen hamburger" as the word group in the case of adding the new word to the previously input words and generates the word group B "Shibuya hamburger" and the word group C "hamburger ramen" as the word groups in the case of replacing each of the previously input words with the new word, as shown in Fig. 11 (b).

Next, the co-occurrence probability derivation unit 14 reads co-occurrence probabilities of the respective word groups generated in step S3, out of the co-occurrence probability database 14A, to derive the co-occurrence probabilities of the respective word groups (step S4: occurrence information derivation step). For example, in the example of Fig. 8, the co-occurrence probability derivation unit 14 derives 0.3 as the co-occurrence probability of the word group A "Shibuya ramen hamburger", 0.9 as the co-occurrence probability of the word group B "Shibuya hamburger", and 0.6 as the co-occurrence probability of the word group C "hamburger ramen".

Then, the determination unit 15 determines the word group B "Shibuya hamburger" which is the word group with the maximum derived co-occurrence probability, as the word group to be used in the new retrieval (step S5: determination step).

Thereafter, the retrieval unit 12 executes the information retrieval using the word group B "Shibuya hamburger" determined in step S5 (step S6), and the retrieval result output unit 16 outputs the new retrieval result (step S7).

By the processing as described above, the word group to be used in the new retrieval can be readily and suitably determined according to the respective co-occurrence information (co-occurrence probabilities herein) of various word groups.

### [Second Embodiment]

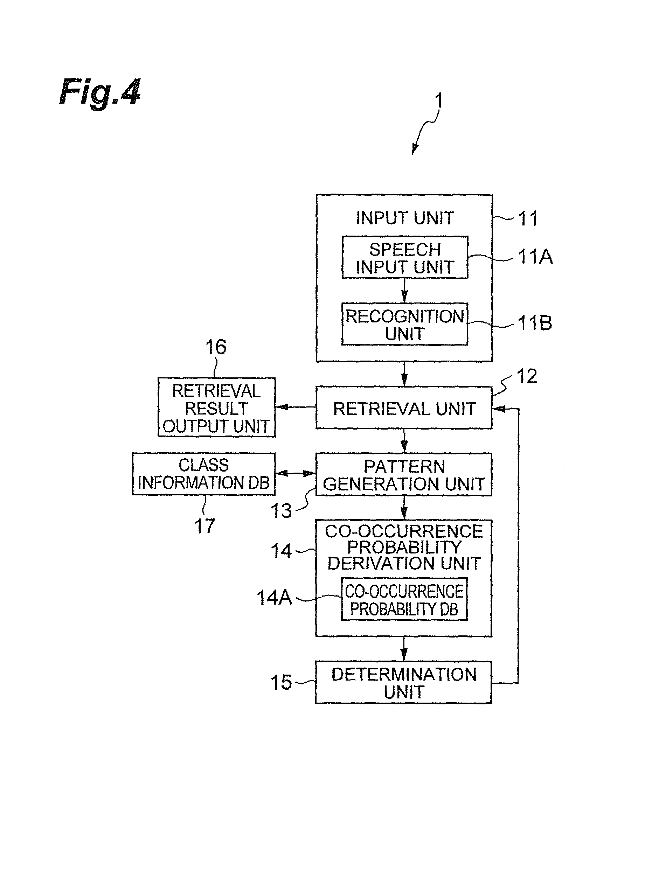

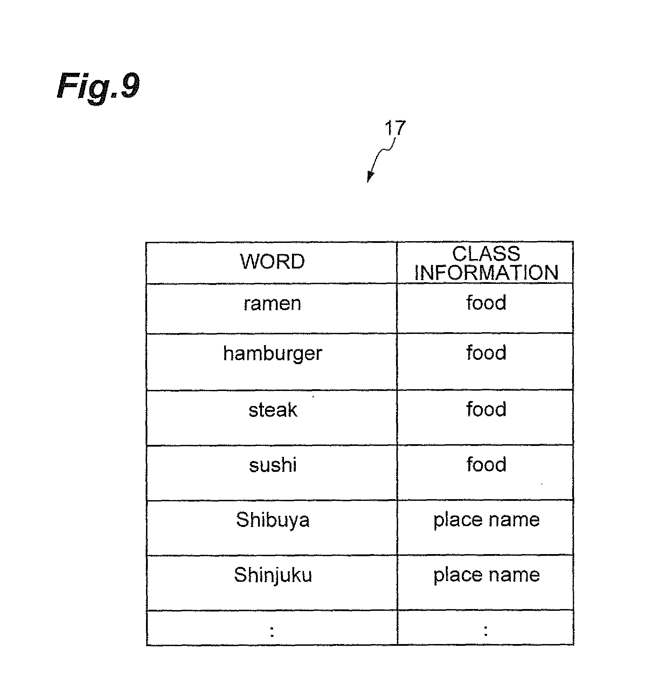

The second embodiment will describe an embodiment of generating word groups according to class information of words. As shown in Fig. 4, the information retrieval device 1 of the second embodiment has a configuration obtained by further adding a class information database 17 to the information retrieval device of the first embodiment in Fig. 1. The class information database 17 stores class information of various words in correspondence to the words, for example, as shown in Fig. 9. The pattern generation unit 13 in the second embodiment has a function to read the respective class information of the previously input words and the new word, out of the class information database 17, and to generate word groups according to the class information. Specifically, the pattern generation unit 13 generates the word groups, excluding a case of replacing "a previously input word having class information different from the class information that the new word has" with "the new word".

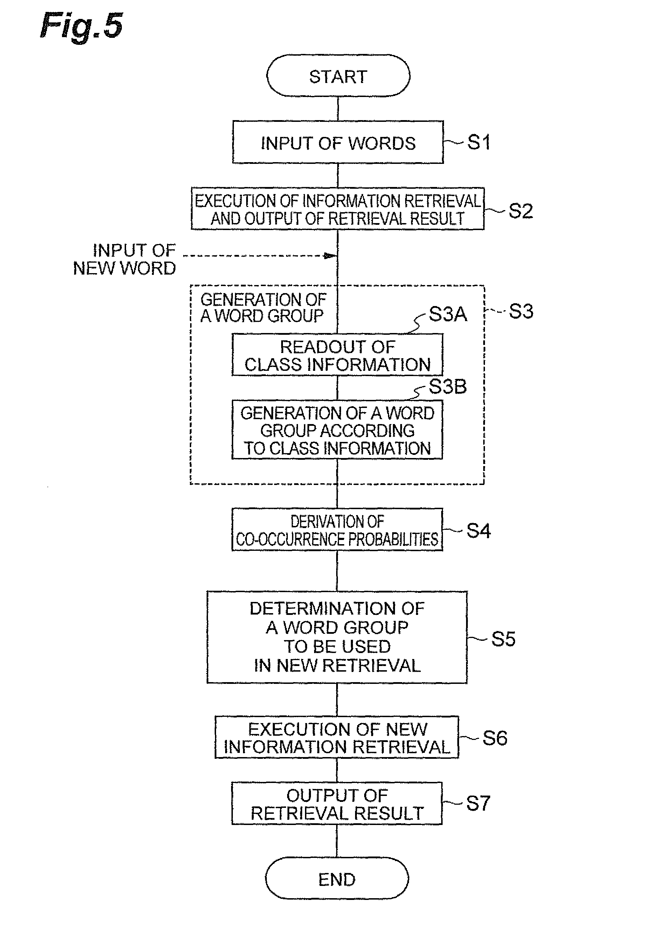

Fig. 5 shows the processing executed by the information retrieval device 1 of the second embodiment. Since the processing in the second embodiment is different in the word group generation process of step S3 from the processing in the first embodiment in Fig. 3, the step S3 will be described below.

In step S3 shown in Fig. 5, the pattern generation unit 13 reads the respective class information of the previously input words and the new word, out of the class information database 17 (step S3A). For example, assuming the case where the new word "hamburger" is entered after execution of the retrieval process with the plurality of words "Shibuya ramen", as in the first embodiment, the pattern generation unit 13 reads "place name" as the class information of "Shibuya", "food" as the class information of "ramen", and "food" as the class information of "hamburger" out of the class information database 17 in Fig. 9.

Then the pattern generation unit 13 generates the word groups, excluding the case of replacing "the previously input word having class information different from the class information that the new word has" with "the new word". In the above example, the class information of the new word "hamburger" is "food" which is the same as the class information of "ramen" but different from the class information "place name" of "Shibuya", and, therefore, the previously input word having the class information different from the class information that the new word "hamburger" has should be "Shibuya". For this reason, the pattern generation unit 13 generates the word groups, excluding the case of replacing "Shibuya" with the new word "hamburger" (i.e. the word group C "hamburger ramen" in Fig. 11(b)). Accordingly, the pattern generation unit 13 generates the word group A "Shibuya ramen hamburger" and the word group B "Shibuya hamburger" shown in Fig. 11(c).

Thereafter, the processes of step S4 and the subsequent steps are executed for only the word groups A and B.

The second embodiment as described above avoids the word group resulting from the replacement between words having class information different from each other, thereby to eliminate the irrelevant word group.

As in the first and second embodiments, the determination unit determines the word group with the maximum co-occurrence information (co-occurrence probability herein) as the word group to be used in the new retrieval, so as to eliminate a need for user's intervention and to implement the automatic determination of the word group.

### [Third Embodiment]

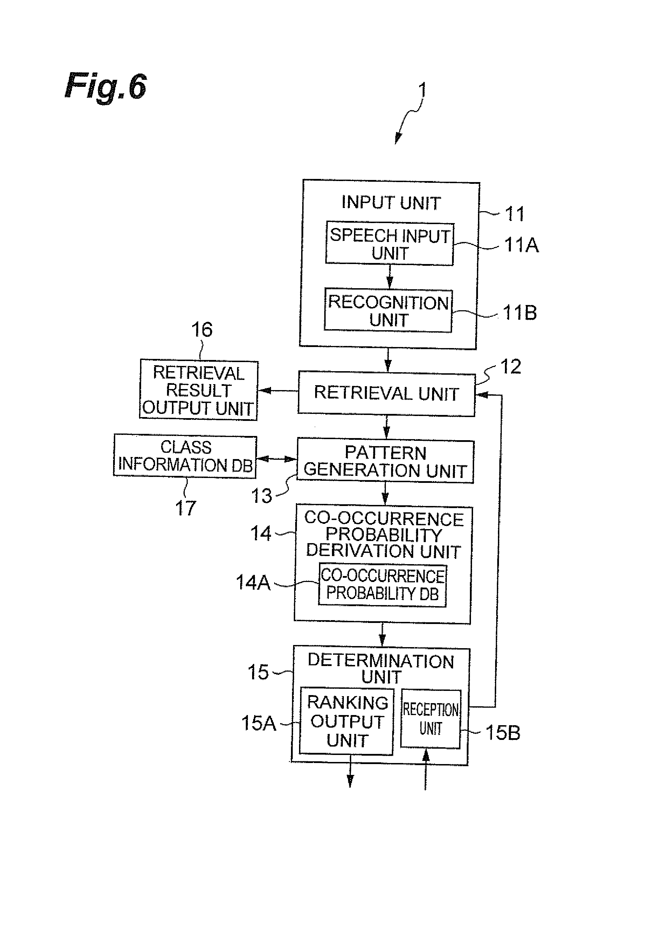

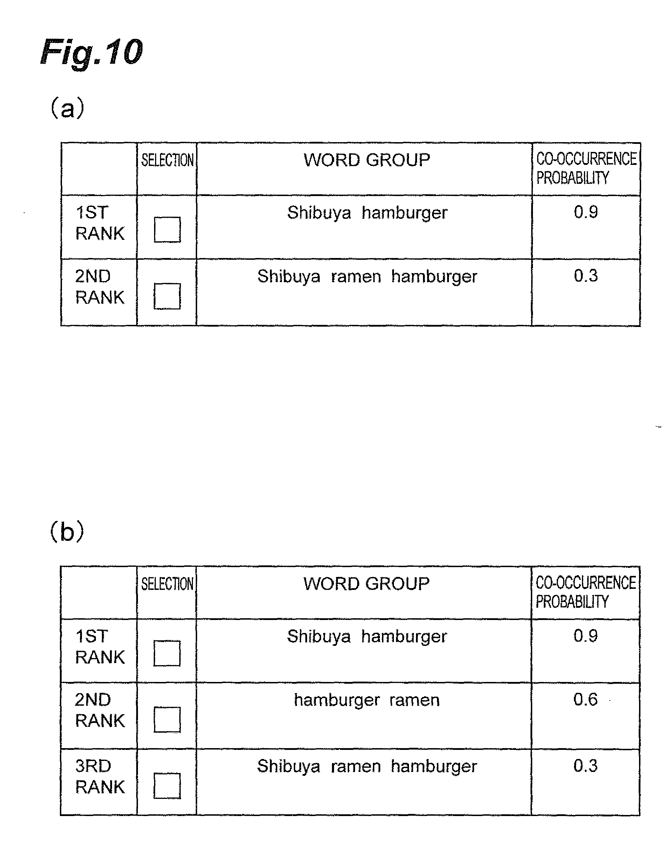

The third embodiment will describe an embodiment of outputting the word groups in a ranking format in descending order of the co-occurrence information (co-occurrence probabilities herein) and allowing the user to select one. As shown in Fig. 6, the information retrieval device 1 of the third embodiment is one obtained by modifying the configuration of the determination unit 15 in the information retrieval device of the second embodiment in Fig. 4. The determination unit 15 includes a ranking output unit 15A to output the word groups in a selectable ranking format in descending order of the co-occurrence probabilities derived by the co-occurrence probability derivation unit 14, and a reception unit 15B to receive a word group selected by the user and determine the selected word group as a word group to be used in new retrieval. The form of the output by the ranking output unit 15A may be, for example, display output or speech output, but is not limited to a specific output form. As an example herein, the ranking output unit 15A provides a display output of a screen showing the word group in the ranking format as shown in Fig. 10(a) or (b).

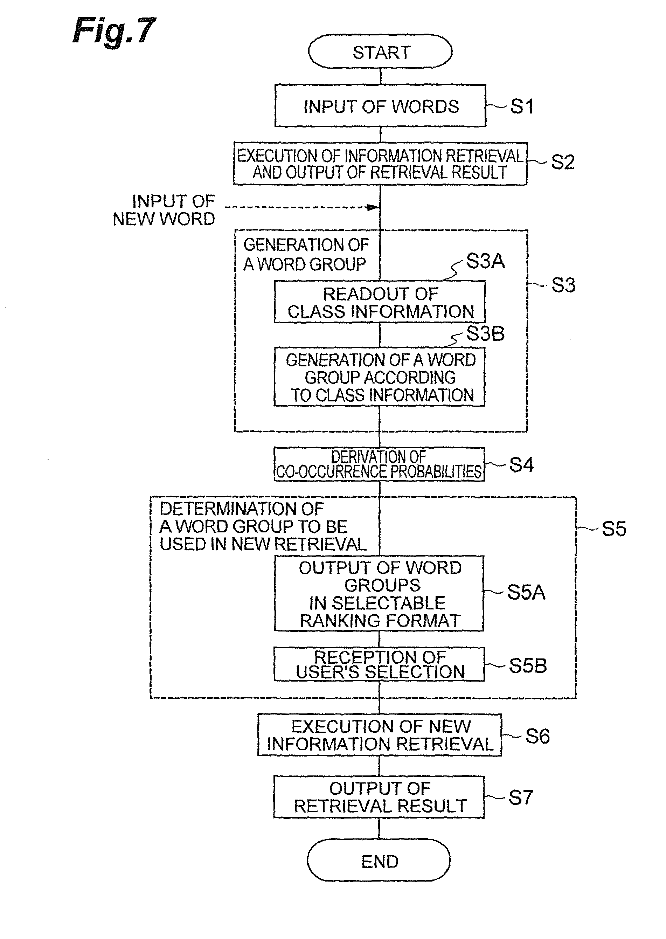

Fig. 7 shows the processing executed by the information retrieval device 1 of the third embodiment. Since the processing in the third embodiment is different in the word group generation process of step S5 from the processing in the second embodiment in Fig. 5, the step S5 will be described below.

In step S5 shown in Fig. 7, the ranking output unit 15A outputs the word groups in the selectable ranking format in descending order of the co-occurrence probabilities derived by the co-occurrence probability derivation unit 14 (step S5A). For example, in the case where the pattern generation unit 13 generates the word group A "Shibuya ramen hamburger" and the word group B "Shibuya hamburger" shown in Fig. 11(c), step S4 is carried out to derive the co-occurrence probabilities of the respective word groups A and B, and step S5A is carried out to output the word groups A and B in the selectable ranking format in the descending order of the co-occurrence probabilities as shown in Fig. 10(a). This allows the user to select a word group to be used in the new retrieval, for example, using the selection column in Fig. 10(a), from the output screen of the ranking format. Although the output example of Fig. 10(a) includes outputting the information of the co-occurrence probabilities of the respective word groups, it is not essential to output the information of co-occurrence probabilities.

When the user selects a word group to be used in the new retrieval, the reception unit 15B receives the selected word group and determines the word group as the word group to be used in the new retrieval (step S5B). Thereafter, the processes of step S6 and the subsequent steps are carried out with the determined word group.

According to the third embodiment as described above, the user is allowed to select the word group to be used in the new retrieval, from the output screen of the ranking format.

The third embodiment described the example of the modified configuration of the determination unit 15 in the information retrieval device of the second embodiment in Fig. 4, but it is also possible to modify the configuration of the determination unit 15 in the information retrieval device of the first embodiment in Fig. 1. In that case, for example in step S4 in Fig. 3, the pattern generation unit 13 generates the word group A "Shibuya ramen hamburger", the word group B "Shibuya hamburger", and the word group C "hamburger ramen" shown in Fig. 11(b); in step S4, the co-occurrence probabilities of the respective word groups A-C are derived; in step S5A, the word groups A-C are output in the selectable ranking format in descending order of the co-occurrence probabilities as shown in Fig. 10(b). This allows the user to select a word group to be used in the new retrieval, for example, using the selection column in Fig. 10(b), from the output screen of the ranking format.

The above first and second embodiments describes the examples wherein the determination unit 15 determines the word group with the maximum co-occurrence information (co-occurrence probability as an example) as the word group to be used in the new retrieval, but we can assume a case where there are two or more word groups with the maximum co-occurrence information and a case where there is little difference between the co-occurrence information of the first rank and the co-occurrence information of the second rank in the descending order of the co-occurrence information. For this reason, a modification example may be arranged for a case where there is the co-occurrence information with a difference not more than a given value from the co-occurrence information of the first rank in the descending order of the co-occurrence information, such that the information retrieval device outputs the word group with the pertinent co-occurrence information and the word group with the co-occurrence information of the first rank for the user as in the third embodiment (e.g., the output in the ranking format), whereby the user is allowed to select a word group to be used in the new retrieval.

The above first to third embodiments describes examples of speech input of words as the input unit 11 for input of words, but, besides the speech input of words, it is also possible to adopt input of words by various information input means such as a keyboard, with the same action and effect as in the first to third embodiments.

The above first to third embodiments are described on the assumption that the "addition of the new word" is only (1) the case of adding the new word as an additional word, out of (1) the case of adding the new word as an additional word, (2) the case of binding the new word to the head of one previously input word, and (3) the case of binding the new word to the tail of one previously input word, but it is also possible to assume all the above cases (1) to (3), any one of the above cases (1) to (3), or any two of the above cases (1) to (3). The same action and effect as in the first to third embodiments can also be achieved in all the cases.

Now, Fig. 12 shows a configuration example of an information retrieval device with essential components for achievement of the action and effect according to the present invention. As shown in this Fig. 12, the information retrieval device 1 is provided with the input unit 11 for inputting a word, the pattern generation unit 13 which, upon input of a new word after input of a given number of words, generates word groups in a case of adding the new word to a previously input word and in a case of replacing a previously input word with the new word, an occurrence information derivation unit 14X which, for each of the word groups generated, derives occurrence information corresponding to a probability of occurrence of the word group, and the determination unit 15 which determines a word group to be used in new retrieval, based on the derived occurrence information. In this information retrieval device 1, the processing is performed in the following manner as shown in Fig. 13: after input of the given number of words (step S1), when a new word is entered, the pattern generation unit 13 generates the word groups in the case of adding the new word to the previously input word and in the case of replacing the previously input word with the new word (step S3); the occurrence information derivation unit 14X derives the occurrence information on each of the generated word groups (step S4X); then the determination unit 15 determines a word group to be used in the new retrieval, based on the derived occurrence information (step S5). This configuration allows the information retrieval device to readily and suitably determine the word group to be used in the new retrieval, according to the respective occurrence information of various word groups. Namely, the information retrieval device can readily and suitably set an appropriate word or words as a query upon input of a new word, without a need for indispensability of presetting a rule with consideration of meaning.

The above first to third embodiments describes the determination of the new word groups in the case where the new word is entered after the input of "two words", but the present invention can also be applied to determination of new word groups in cases where a new word is entered after input of "three or more words", with the same action and effect.

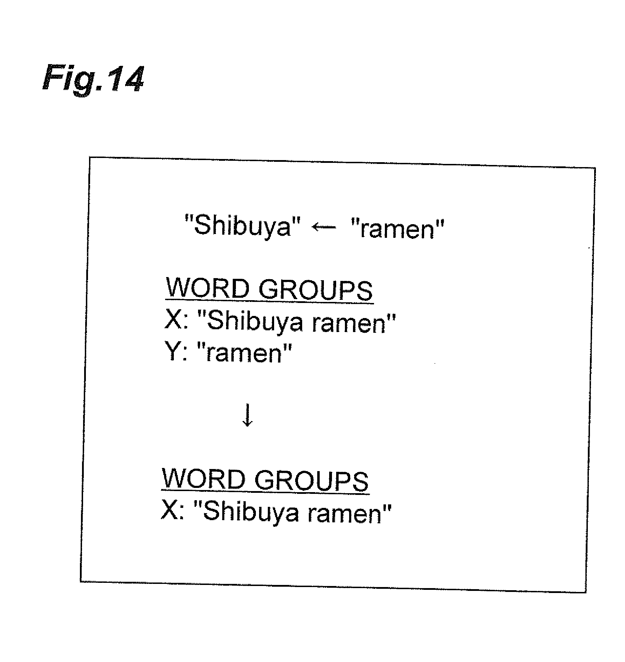

Similarly, the present invention can also be applied to determination of new word groups in cases where a new word is entered after input of "one word". For example, as shown in Fig. 14, when a new word "ramen" is entered after input of one word "Shibuya", the pattern generation unit 13 generates word group X "Shibuya ramen" as a word group in the case of adding the new word to the previously input word and generates word group Y "ramen" as a word group in the case of replacing the previously input word with the new word. Then the occurrence information derivation unit 14X derives the respective occurrence information of the generated word groups X and Y. The occurrence information derived herein may be, for example, as follows: for the word group X including the plurality of words, the derived information is values obtained by dividing a co-occurrence probability by occurrence probabilities of the individual words in order; for the word group Y including one word, the occurrence information is the occurrence probability of the word. Furthermore, the determination unit 15 determines a word group to be used in the new retrieval, based on the derived occurrence information. As described above, the present invention can also be applied to the determination of the new word groups in the case where the new word is entered after the input of "one word", with the same action and effect. The pattern generation unit 13 may be configured as in the second embodiment so that the pattern generation unit 13 refers to the class information of each word, recognizes that the class information "place name" of the previously input word "Shibuya" is different from the class information "food" of the new word "ramen", and generates the word group, excluding the case of replacement between these words of the different class information. In this case, the pattern generation unit 13 generates only the word group X "Shibuya ramen", as shown in the lower part of Fig. 14.

### List of Reference Signs

1: information retrieval device; 11: input unit; 11A: speech input unit; 11B: recognition unit; 12: retrieval unit; 13: pattern generation unit; 14: co-occurrence probability derivation unit; 14A: co-occurrence probability database; 14X: occurrence information derivation unit; 15: determination unit; 15A: ranking output unit; 15B: reception unit; 16: retrieval result output unit; 17: class information database; 101: CPU; 102: RAM; 103: ROM; 104: communication module; 105: auxiliary storage device; 106: input device; 107: output device.

## Claims

1. An information retrieval device for retrieving information related to a word, the information retrieval device comprising:
an input unit for inputting a word;
a pattern generation unit which, upon input of a new word after input of a given number of words, generates a word group in a case of adding the new word to a previously input word and a word group in a case of replacing a previously input word with the new word;
an occurrence information derivation unit which, for each of the word groups generated, derives occurrence information corresponding to a probability of occurrence of the word group; and
a determination unit which determines a word group to be used in new retrieval, based on the derived occurrence information.

2. The information retrieval device according to claim 1, further comprising:
a class information database storing class information of various words,
wherein the pattern generation unit reads the class information of each of the new word and the previously input word out of the class information database, and generates the word groups, excluding a case of replacing the previously input word having the class information different form the class information that the new word has, with the new word.

3. The information retrieval device according to claim 1 or 2,
wherein the determination unit outputs the word groups in a selectable ranking format in descending order of the derived occurrence information, and determines a word group selected by a user as the word group to be used in the new retrieval.

4. The information retrieval device according to claim 1 or 2,
wherein the determination unit determines a word group with maximum occurrence information derived, as the word group to be used in the new retrieval.

5. The information retrieval device according to any one of claims 1 to 4,
wherein the input unit includes:
a speech input unit for inputting a speech; and
a recognition unit for recognizing a word from the input speech.

6. The information retrieval device according to any one of claims 1 to 5,
wherein the occurrence information derivation unit includes an occurrence information database storing occurrence information of various word groups, and reads the occurrence information of each of the generated word groups out of the occurrence information database, to derive the respective occurrence information of the word groups.

7. The information retrieval device according to any one of claims 1 to 6,
wherein the given number of words are a plurality of words, and the occurrence information derivation unit derives co-occurrence information as the occurrence information.

8. The information retrieval device according to any one of claims 1 to 7,
wherein adding the new word to a previously input word includes:
a case of adding the new word as an additional word;
a case of binding the new word to the head of one previously input word; and
a case of binding the new word to the tail of one previously input word.

9. An information retrieval method for retrieving information related to a word, which is executed by an information retrieval device, the information retrieval method comprising:
an input step for inputting a word;
a pattern generation step of, upon input of a new word after input of a given number of words, generating a word group in a case of adding the new word to a previously input word and a word group in a case of replacing a previously input word with the new word;
an occurrence information derivation step of, for each of the word groups generated, deriving occurrence information corresponding to a probability of occurrence of the word group; and
a determination step of determining a word group to be used in new retrieval, based on the derived occurrence information.
